Europäisches Patentamt

**European Patent Office**

**Office européen des brevets**

(19)

(11) Publication number: **0 155 185**
A2

# EUROPEAN PATENT APPLICATION

(21) Application number: **85301776.2**

(22) Date of filing: **14.03.85**

(51) Int. Cl.⁴: **B 62 M 13/00,** B 62 M 7/00,
B 62 M 29/00, B 62 M 23/02

(30) Priority: **15.03.84 GB 8406726**

(43) Date of publication of application: **18.09.85**
**Bulletin 85/38**

(84) Designated Contracting States: **BE DE FR IT NL SE**

(71) Applicant: **Baker, Alan, 30 Station Road Honley,
Huddersfiald West Yorkshire HD7 2LL (GB)**

(72) Inventor: **Baker, Alan, 30 Station Road Honley,
Huddersfiald West Yorkshire HD7 2LL (GB)**

(74) Representative: **Wharton, Peter Robert et al,
URQUHART-DYKES & LORD Beckett's Bank
Chambers 19 Cheapside, Bradford West Yorkshire
BD1 4HR (GB)**

(54) **Electrically assisted cycle.**

(57) An electrically assisted pedal cycle is provided having a drive unit 10 pivotally mounted to a frame 16 adjacent a wheel 24, the unit comprising a drive motor 20 and, operatively connected thereto a wheel engaging drive roller 22, the centre of gravity of the unit being arranged in relation to the pivot 12 such that the drive unit 10 hangs clear of the cycle wheel 24 when not under drive conditions.

The drive unit 10 can also be used in such a way that the drive roller 22 comes into contact with the ground surface instead of the cycle wheel 24.

A distinct advantage of the invention is that it does not require a clutch or other manually operated mechanism to bring the drive roller 22 into and out of engagement with either the cycle wheel 24 or the ground.

## ELECTRICALLY ASSISTED CYCLE

This invention relates to a motor assisted cycle, and in particular relates to a bicycle or tricycle assisted by means of an electric motor.

Various means for power assisting cycles have been proposed, including electric motors. Such systems have incorporated manually operated mechanisms for engaging or disengaging the drive, or mechanisms such as over-run clutches for allowing the cycle to be pedalled without power assistance.

The invention seeks to provide a device for assisting pedal cycles which incorporates automatic engagement and disengagement of a roller friction drive to a wheel of the cycle which can be used independently of or to assist the pedal drive.

According to the present invention there is provided a drive unit pivotally mounted to a        frame adjacent a wheel, the unit comprising a drive motor and, operatively connected thereto a wheel engaging drive roller, the centre of gravity of the unit being arranged in relation to the pivot such that the drive roller hangs clear of the cycle wheel when not under drive conditions.

The locus of movement of the drive unit about its pivot is such that the drive roller can be brought into contact with the cycle wheel. When the motor is actuated to cause the drive roller to rotate there is an instantaneous torque reaction due to the acceleration of the rotating parts which acts on the drive unit as a whole and causes it to rotate about its pivot axis and thus cause the drive roller to make contact with the tyre on the cycle wheel.  Provided the surface speed of the roller is greater than that of the wheel the roller will  make frictional engagement with the tyre and the driving torque will then cause the unit to rotate further about its pivot axis so depressing the surface of the tyre and increasing the radial force between the drive roller and the tyre.  The maximum depression, and hence frictional driving force applied to the tyre, occurs when  the roller axis intersects the plane containing the cycle wheel axis and the drive unit pivot axis.  A stop is arranged to prevent the drive unit from rotating beyond this point, and so actuation of the drive motor causes the drive unit to rotate until the drive roller contacts the tyre where it is there held by a combination of the driving torque and the stop in the driving or operative position for as long as power is supplied.  As soon as power is shut off from the drive motor,
the rotation of the cycle wheel        pushes it away from the driving position and once the drive roller is free of the cycle tyre the unit will take up its rest position with its centre of gravity below the pivot axis.

The stop referred to above is so located, for example on the frame, as to restrain the drive unit from appreciable swing past the point of maximum engagement of the drive roller with the cycle tyre.  The stop is preferably cushioned in some way for example by being made of a resilient material or containing springing.  The stop may then be adjusted to maintain, in use, the drive roller at or close to the position where the roller centre lies in the plane containing the cycle wheel and the pivot axis of the drive unit.

In order to limit the forward swing of the drive unit, when power is disengaged, and to prevent oscillation when the drive is not engaged another stop may be employed which again may incorporate a resilient material or springs to provide cushioning.

It can be seen that the device of the invention will automatically be brought into engagement with the cycle wheel merely by switching on the power to the drive motor where it will remain as long as power is supplied provided the surface speed of the wheel does not increase beyond the drive speed of the drive roller. Should the latter happen, for example when the bicycle is going quickly downhill, the motor will automatically disengage. Similarly when the power is shut off, the motor again automatically disengages. Thus no clutch or other manually operated mechanism is required to bring the drive roller into and out of engagement with the cycle wheel.

The invention will be described further, by way of example, with reference to the accompanying drawings, in which:

Figure 1 is a partial view, in elevation, of the front of a bicycle fitted with a device in accordance with the invention;

Figure 2 is a similar view to figure 1 with the device in driving contact with the cycle wheel;

Figure 3 is a similar view to figure 2, on an enlarged scale, illustrating a different stop mechanism;

Figure 4a and b are diagrammatic views illustrating the device of the invention fitted in different locations; and

Figure 5 illustrates the device in driving contact with the ground.

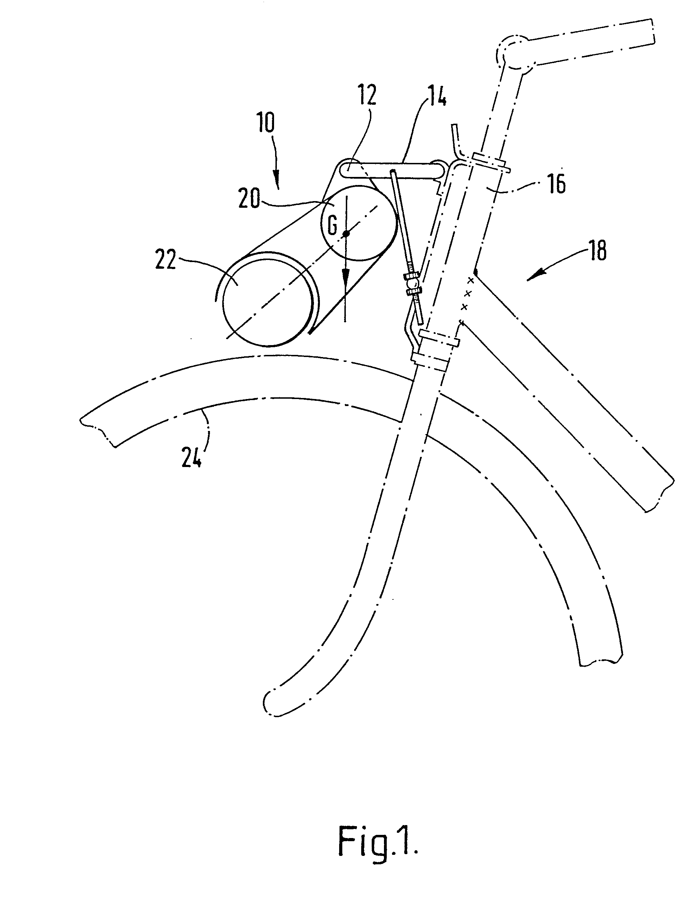

Referring to the drawings, figure 1 illustrated the front frame and wheel of a bicycle or tricycle having a driving unit 10 pivotally attached at 12 to a bracket 14 fixed to the wheel fork and handlebar post assembly of the frame 16 of the cycle 18. The unit 10 comprises an electric drive motor 20 operatively connected, for example by means of a drive belt or drive chain (not shown) to a

0155185

drive roller 22 having a friction surface for engagement with and driving of the tread portion of a cycle wheel and tyre 24. The centre of gravity of the unit 10 is indicated at G and so, with the power off, the unit 10 will hang below the bracket 14 as illustrated in figure 1 with the drive roller 22 clear of the cycle wheel 24.

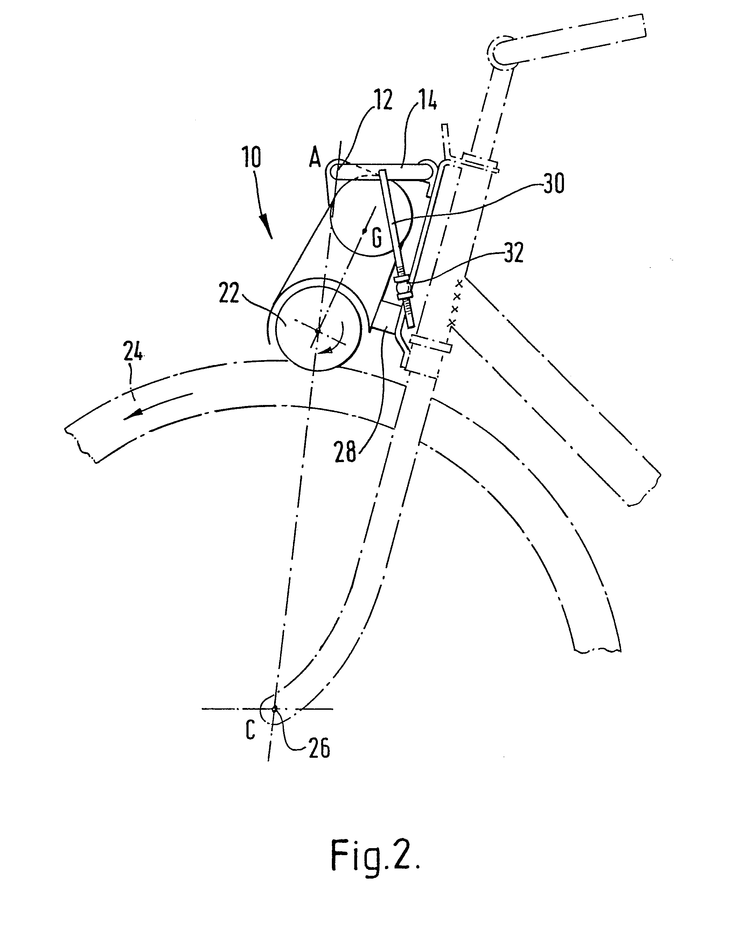

When the power is applied to the motor 20, for example by means of a switch located on the handle bar of the cycle there is an instantaneous torque reaction owing to the acceleration of the rotating parts which causes the unit 10 to swing anti-clockwise as viewed in figure 1 thereby bringing the drive roller 22 into contact with the tread portion of the wheel and tyre 24.    Since the drive roller 22 is being driven by the motor 20 its surface speed will be greater than the surface speed of the tyre 24 and it will therefore tend to continue to move in an anti-clockwise sense and would, if not restrained, spring out of contact with the tyre on the right hand side (as viewed in figure 2) of the plane AC in which the pivot axis 12 and the axis 26 of the cycle wheel 24 lie.  However, a stop 28 comprising a cushioned or spring loaded pad is positioned so as to abut the drive unit 10 and maintain it, under drive conditions, with the axis of the drive roller 22 on the plane AC.

An adjusting rod 30 is provided having adjusting nuts 32 so that the position of the bracket 14, and the height of the pivot axis 12 above the tyre surface 24, can be altered so that the drive roller 22 is in sufficient  frictional engagement with the tyre 24 in the position shown in figure 2 without excessive deformation of the tyre.   Also, should it be desired to employ a different size roller to alter the gearing either to improve the performance of the power assistance for hill climbing or for a higher speed operation the different roller size can be accommodated by adjusting the rod 30.

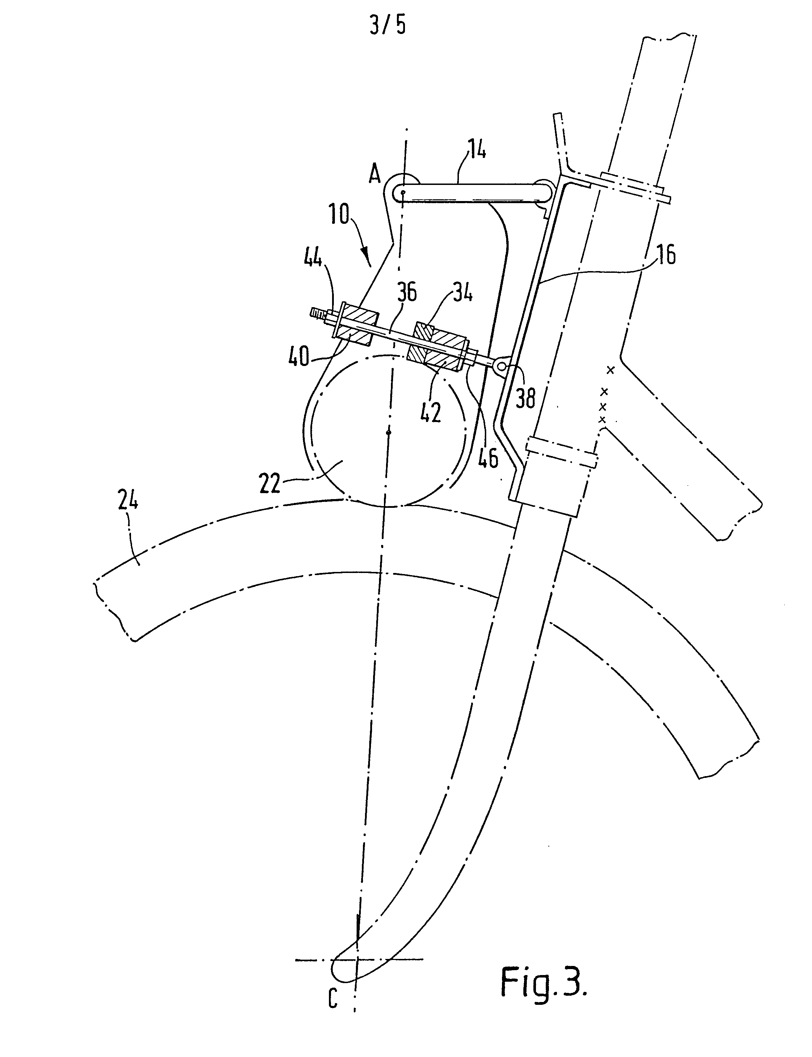

Turning now to figure 3 a different form of stop is employed.   In this case, the drive unit 10 has pivotally attached thereto a block 34 slideable on a rod 36 which is in turn pivotally attached at 38 to the frame 16.   On the rod 36 there are provided two adjustable stops 40, 42 with associated adjusting nuts 44,46. The stop 42 is equivalent to 28 in figure 2 and holds the drive roller 22 in its optimum position with its axis lying on the plane AC as before. The stop 40 is set to correspond to the figure 1 position and prevents oscillation of the unit 10 when power is shut off.

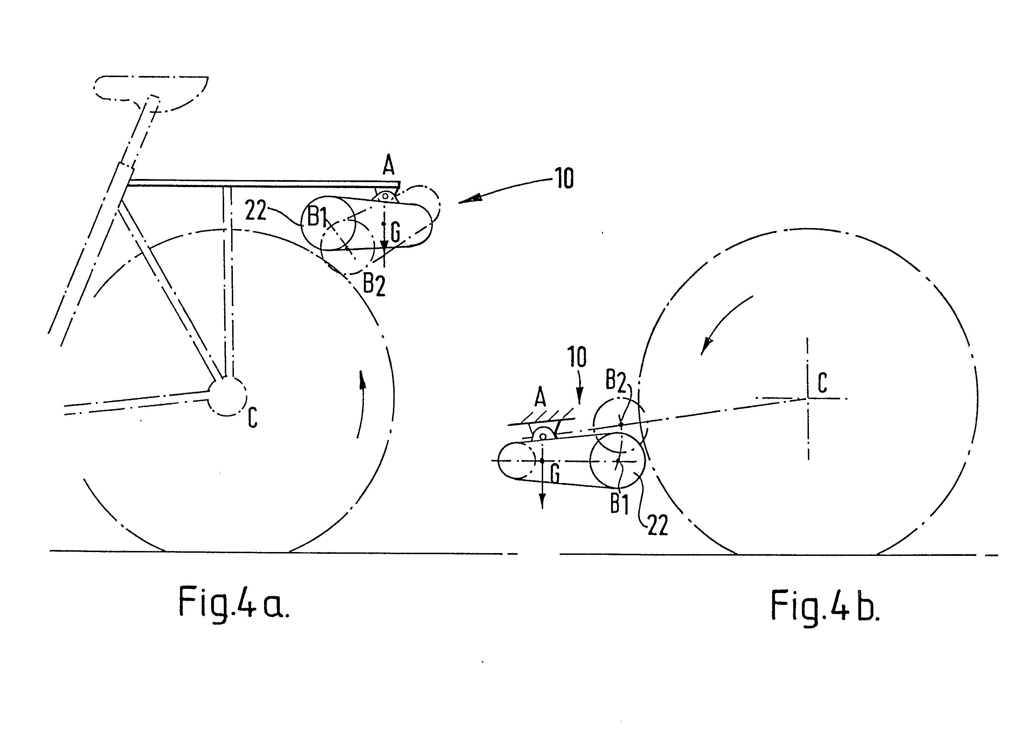

Figure 4 illustrates other positions in which the unit 10 can be mounted. In figure 4(a) the unit 10 is mounted at the rear of a bicycle driving the rear wheel and in figure 4(b) the unit is mounted adjacent the wheel of a pedal car or go-cart. In each case the position shown as B1 corresponds to the 'off' position, and the position shown as B2 corresponds to the drive position. Not shown in figure 4 are stops corresponding to the stops 28, 42 and 40 as before.

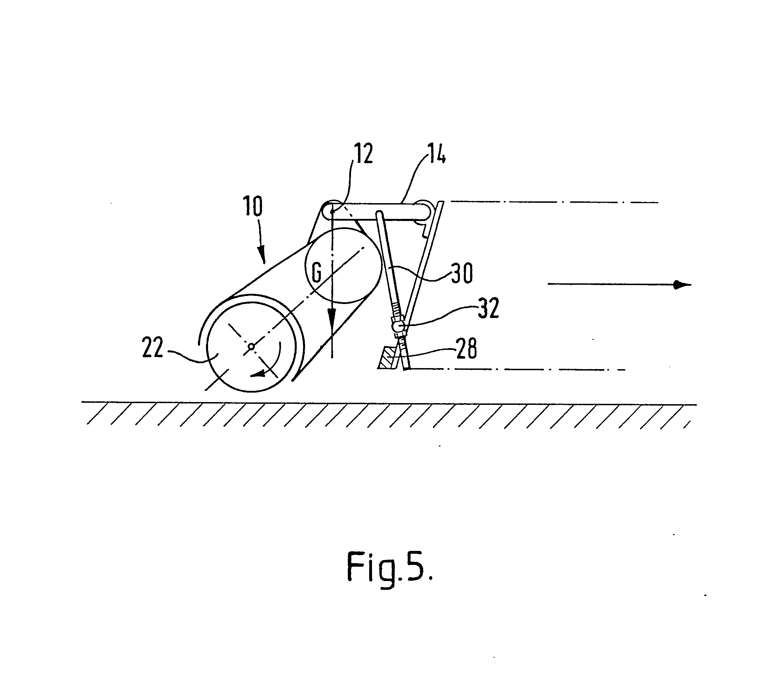

Figure 5 illustrates a completely different use of the unit 10 in which the drive roller 22 acts directly onto the ground instead of a wheel. The motor support frame is attached to the frame of the vehicle which is to be propelled. Preferably the drive roller 22 has an elastic tyre which will conform to the ground surface and/or the mounting may be spring loaded to ensure adequate force on the roller to prevent slip.
This type of drive can be used on light trucks, pedal cars, go-carts and wheelchairs and would normally be mounted on the longitudinal centre line of the vehicle so as to be equally effective when turning in either direction.

The power supplied to the drive motor 20 is provided as conventionally known from storage batteries which can be mounted in a suitable pannier on the cycle or other vehicle to be power assisted. The speed of which is independant of the diameter of the wheel upon which the roller acts. The range of the vehicle will depend on the storage capacity of the battery, the cycling conditions, and the amount of pedal assistance rendered but in a typical case could be about 15 miles.

CLAIMS

1.    An electrically assisted pedal cycle having a drive unit pivotally mounted to a frame adjacent a wheel, the unit comprising a drive motor and, operatively connected thereto a wheel engaging drive roller, the centre of gravity of the unit being arranged in relation to the pivot such that the drive unit hangs clear of the cycle wheel when not under drive conditions.

2.    A drive unit as claimed in claim 1 having a 'stop' located so as to restrain the drive unit from appreciable swing past the point of maximum engagement of the drive roller with the wheel.

3.    A drive unit as claimed in claim 2 in which the stop is cushioned by being made of a resilient material or by containing springing.

4.    A drive unit as claimed in claim 2 or 3 in which the stop may be adjusted to maintain, in use, the drive roller at or close to the position where the roller centre lies in the plane containing the cycle wheel and the pivot axis of the drive unit.

5. A drive unit as claimed in any one of claims 1 to 4 which has a stop which limits the forward swing of the drive unit, when power is disengaged, and prevents oscillation when the drive is not engaged.

6. A drive unit as claimed in any one of claims 1 to 5 where the unit is positioned in such a way that the drive roller comes into contact with the ground surface instead of the cycle wheel.

7. A drive unit substantially as hereinbefore described with reference to and as illustrated by the accompanying drawings.

Fig.1.

Fig.2.

0155185

Fig.3.

Fig.4a.

Fig.4b.

4/5

0155185

Fig.5.